# EUROPÄISCHE PATENTSCHRIFT

(11) **EP 1 333 203 B1**
(45) Veröffentlichungstag und Bekanntmachung des Hinweises auf die Patenterteilung: **05.09.2007**
(21) Anmeldenummer: 02027349.6
(22) Anmeldetag: 07.12.2002
(51) Int. Cl.: F16H 63/34

(54) **Sperreinrichtung**
Locking device
Dispositif de verrouillage

(30) Priorität: 31.01.2002 US 353544 P; 02.02.2002 DE 10204232
(43) Veröffentlichungstag der Anmeldung: 06.08.2003
(73) Patentinhaber: Schaeffler KG, 91074 Herzogenaurach (DE)
(72) Erfinder: Krämer, Klaus, 91460 Baudenbach (DE); Pintus, Susanne, 91074 Herzogenaurach (DE)

(56) Entgegenhaltungen:
- DE-A1- 2 428 265
- DE-A1- 4 242 456
- DE-C1- 3 125 632
- GB-A- 598 092
- US-A- 4 567 785

## Beschreibung

### Gebiet der Erfindung

Die Erfindung betrifft eine Sperreinrichtung mit einem Sperrglied zum wahlweisen Sperren wenigstens einer mittels einem Schaltfinger betätigten ersten Schaltschiene sowie einer zweiten Schaltschiene, wobei der um eine Kippachse geschwenkte Schaltfinger formschlüssig beweglich wahlweise in eine der Schaltschienen eingreift und wobei die Schaltschiene, in die der Schaltfinger eingreift, mittels des um die Schwenkachse schwenkenden Schaltfingers in mindestens eine Richtung längs verschiebbar ist und wobei die erste Schaltschiene mittels des Sperrgliedes zu der zweiten Schaltschiene längs festgesetzt ist, wenn der um die Kippachse geschwenkte Schaltfinger formschlüssig beweglich in die zweite Schaltschiene eingreift.

### Hintergrund der Erfindung

In DE 31 25 632 C1 ist eine derartige Sperreinrichtung beschrieben. Einem Schaltfinger sind längs verschiebbare Schaltschienen zugeordnet. Mit den Schaltschienen sind einzelne Gänge des Schaltgetriebes schaltbar. Die Schaltschienen sind mit Schaltgassen bildenden Eingriffsnuten versehen, in die der Schaltfinger durch entsprechendes axiales Verschieben einer Schaltwelle eingreifen kann. Wenn die Eingriffsnuten in einer zur Verschieberichtung des Schaltfingers ausgerichteten Linie liegen, steht der Schalthebel des Wechselgetriebes in einer Neutralstellung, in der kein Gang eingelegt ist. Beim Wählen einer Gasse greift der Schaltfinger in eine der Eingriffsnuten einer der Schaltschienen ein. Durch Verdrehen der Schaltwelle mit dem Schaltfinger schwenkt der Schaltfinger und schaltet einen der Gänge. An dem Schaltfinger sind zwei radial abragende Sperrnocken ausgebildet. Die Sperrnocken liegen in der Neutralstellung etwa horizontal ausgerichtet oberhalb der Eingriffsnuten und wirken mit bis in die Ebene der Sperrnocken verlängerten gabelartigen Wandteilen der Eingriffsnuten zusammen. Der Außenumfang der Sperrnocken ist kreissymmetrisch ausgebildet. Die gabelartigen Wandteile sind der Kreisbogenform des Sperrnockens angepasst und umfassen den Sperrnocken mit einem geringen Spiel. Die Sperrnocken fixieren die Schaltschienen in der Neutralstellung. Die Breite der Sperrnocken ist so ausgelegt, dass unter Berücksichtigung des gesamten Verschiebeweges des Schaltfingers jede der dem Schaltfinger zugeordneten Schaltschiene fixiert ist. In die Sperrnocken ist je ein Schlitz eingefräst. Die Schlitze liegen in einer gemeinsamen Schwenkebene mit dem Schaltfinger. Die Breite der Schlitze ist geringfügig größer als die Stärke jeder einzelnen Schaltschiene. Die Schlitze liegen in einer gemeinsamen Schwenkebene mit dem Schaltfinger. Nach dem Wählen der Gasse liegen der Schaltfinger, die Schlitze und die Wandteile einer Schaltschiene in einer gemeinsamen Ebene. Die Schaltschiene kann mittels des schwenkenden Schaltfingers geschaltet werden, da die Wandteile wahlweise, in Abhängigkeit der Verschieberichtung der Schaltschiene, in die Schlitze des Sperrnockens hineintauchen. Die Tiefe der Schlitze ist so ausgelegt, dass sie Endanschläge für die Längsbewegungen der Schaltschiene bilden.

Die Sperreinrichtung ist in Schaltvorrichtungen zum Schalten von Gangrädern mittels eines Schalthebels eingesetzt. Eines oder zwei auf einer Getriebewelle liegende wahlweise schaltbare Gangräder sind jeweils einer Gasse zugeordnet. Durch die Schaltvorrichtung sind mehrere Gangräder schaltbar. Mindestens ein Gangrad oder maximal zwei Gangräder sind einer Gasse zugeordnet. Jedes Gangrad ist nur in seiner vorbestimmten Gasse schaltbar.

Der Schalthebel ist mittels einer Lageranordnung zu einem Gehäuse schwenkbar angeordnet. Die Lageranordnung ermöglicht Schwenkbewegungen des Schalthebels in einer Wählebene und in einer quer zur Wählebene ausgerichteten Schaltebene. Während der Wähl- und Schaltvorgänge ist der Schalthebel mittels einer Kulisse geführt.

Der Schalthebel steht in der Wählebene in einer Neutralstellung und ist in der Wählebene aus der Neutralstellung durch die Wahl von Gassen wahlweise in eine von mindestens zwei Ruhestellungen schwenkbar. Steht der Schalthebel in einer der Ruhestellungen, ist eine Gasse gewählt. Aus der Ruhestellung ist der Schalthebel in der Schaltebene zum Schalten eines der Gängen in eine Schaltstellung schwenkbar. Die Neutralstellung des Schalthebels ist zumeist auch eine der Ruhestellungen, aus der wahlweise einer von zwei Gängen schaltbar ist.

In den Ruhestellungen bzw. in der Neutralstellung des Schalthebels stehen Schaltschienen in einer mittleren neutralen Stellung, in welcher die mittels der Schaltschienen schaltbaren Gänge nicht geschaltet sind. Der Schalthebel ist an einem freien Ende mit einem Schaltfinger versehen. Jede der Schaltschienen weist eine Eingriffsnut bzw. ein Schaltmaul für den Eingriff des Schaltfingers auf. Durch Wählbewegungen des Schalthebels wird ein wahlweiser Eingriff in eine von mindestens zwei achsparallelen Schaltschienen vorgenommen. Der Schalthebel ist in diesen Stellungen mit einer der Schaltschienen beweglich gekoppelt.

Ein Schwenken des Schalthebels in der Schaltebene aus der Ruhestellung in die eine oder andere Richtung hat ein Verschieben der mit dem Schalthebel gekoppelten Schaltschiene zur Folge, da der Schaltfinger eine die Eingriffsnut begrenzende Flanke beaufschlagt. Einer der Schaltschiene zugeordneten Gänge wird durch das Verschieben der Schaltschiene eingelegt.

Der Schalthebel ist in der Regel zu einem fahrzeugfesten Gehäuse mittels eines kardanisch ausgeführten Gelenkes schwenkbar aufgenommen. Dieses Gelenk bzw. diese Lageranordnung sieht eine kastenförmig ausgebildete Konsole vor. Die Konsole nimmt den Schalthebel auf und ist mittels des Schalthebels um eine quer zur Schwenkachse ausgerichtete Kippachse an dem zu fahrzeugfesten Gehäuse schwenkbar gelagert. Die Kippachse fluchtet mit der Mittenachse von wahlweise einem oder zwei Kippbolzen. Die Kippbolzen lagern die Konsole in der Wählebene, jedoch nicht in der Schaltebene, schwenkbar an dem Gehäuse. Der Schalthebel ist in der Wählebene, in der Konsole unbeweglich, mit der Konsole um die Kippachse schwenkbar. Bei einer Wählbewegung an dem Schaltfinger nimmt der um die Kippachse schwenkende Schalthebel die Konsole mit. Der Schaltfinger ist an der zum Schaltangriff (Schaltknauf) entgegengesetzten Seite der Kippachse am Schalthebel angeordnet und schwenkt mit dem Schalthebel in der Wählebene um die Kippachse.

Die Lageranordnung sieht weiterhin eine schwenkbare Lagerung des Schalthebels in der Schaltebene um eine Schwenkachse in der Konsole vor. Die Schwenkachse verläuft quer zur Kippachse. Die Schwenkachse ist gleichzeitig die Mittenachse von einem in der Konsole angeordneten Schwenkbolzen. Der Schalthebel ist um den Schwenkbolzen in der Schaltebene, jedoch nicht in der Wählebene, an der Konsole gelagert. Der Schaltfinger ist am entgegensetzten Ende des Schalthebels zu der Schwenkachse angeordnet sowie in der Schaltebene, jedoch nicht in der Wählebene, um die Schwenkachse schwenkbar in der Konsole gelagert. Die Schwenkachse und die Kippachse liegen sich kreuzend in einer gemeinsamen Ebene.

Mit der in einer Ebene liegenden Schwenk- und Kippachse des Schalthebels sind der Abstimmung von Schaltkräften und Schaltwegen Grenzen gesetzt. Unter Schaltkräften sind die Kräfte zu verstehen, die am Kraftangriff durch den Bediener (Schaltknauf) am Schalthebel beim Wählen und Schalten spürbar sind. Der Schalthebel legt beim Wählen und Schalten an seinem Kraftangriff definierte Wege zurück. Damit legt auch jeder weitere Punkt an dem Hebel zwischen dem Kraftangriff und der Schwenk- bzw. Kippachse definierte durch seinen Abstand zu den Achsen vorgegebene Wege zurück. Der Weg, zumeist im Bogenmaß, ist von dem Abstand des Schaltknaufs zu den Achsen abhängig. Bei gleichem Schwenkwinkel des Schalthebels um die Kippachse oder Schwenkachse liegt jeder der Punkte, unabhängig davon ob er um die Kippachse oder die Schwenkachse geschwenkt ist, gleiche Wege zurück. Der Schalthebel ist häufig durch eine zwischen dem Kraftangriff und den Achsen gelegene Schaltkulisse geführt. Der Gestaltung von material- und platzsparenden Kulissen sind aufgrund der gleichen Wege des Schalthebels in der Kulisse bei Wähl- und Schaltbewegungen häufig Grenzen gesetzt. Die Schaltkräfte am Schaltknauf sind über das Hebelverhältnis des Schalthebels beeinflussbar. Das Hebelverhältnis ergibt sich aus dem Abstand vom Knauf zu den Achsen und aus dem Abstand von den Achsen zu dem Eingriff des Schaltfingers in die Eingriffsnut der Schaltschiene. Der Länge des in den Fahrgastraum ragenden Schalthebels sind bauraumbedingt in der Regel Grenzen gesetzt. Die Länge des Schaltfingers, ausgehend von den sich kreuzenden Achsen, ist von der Lage der sich dem Schalthebel anschließenden Elemente der inneren Schaltung abhängig.

Der schwenkende Schalthebel ist beim Wählen der Gasse und beim Schalten der Gänge durch Führungsbahnen, z. B. einer Kulisse, geführt. Die Schwenkbewegungen des Schalthebels in Wähl- und Schaltrichtung sind durch Anschläge begrenzt. Die Anschläge sichern ab, dass der Schaltfinger nach dem Abschluss des Wählens einer Gasse exakt in eine der Eingriffsnuten einer der Schaltschienen eingreift. Die den Schaltweg des Schaltfingers begrenzenden Anschläge sichern ab, dass die Schaltschiene exakt in ihre vorgegebene Position und nicht darüber hinaus verschoben wird.

Während eines Schaltvorganges ist nur ein Gangrad schaltbar. Sind zwei Gangräder einer Gasse zugeordnet, ist eines der Gangräder in der Gasse von vornherein nicht schaltbar oder mittels einer Sperreinrichtung in der Gasse gesperrt, während das andere geschaltet wird. Je nach der Ausführung der Schaltvorrichtung sind die weiteren zu der gewählten Gasse benachbarten Gassen gegen unbeabsichtigtes oder selbsttätiges Wählen gesperrt. Ein falsches Wählen bzw. Schalten ist auszuschließen. Die Gangräder in dem zu der gewählten Gasse benachbarten Gassen sind während des Schaltens eines Gangrades und bei eingelegtem Gang gegen unbeabsichtigtes oder selbsttätiges Schalten gesperrt. Der Rückwärtsgang ist in der Regel gegen ein unbeabsichtigtes Anwählen oder Schalten aus einer der Schaltstellungen bzw. Wählpositionen für das Schalten bzw. die Wahl der Vorwärtsgänge gesperrt.

GB 598,092, als nächstliegender Stand der Technik betrachtet, zeigt eine Schalteinrichtung, in der zum Wählen der Gasse eine Schaltschiene mit einem Schaltfinger geschwenkt wird. Gleichzeitig mit dem Schaltfinger schwenkt ein Sperrglied in Form einer Sperrplatte. Die Sperrplatte ist zu der Schaltschiene längs festgesetzt, jedoch um die Kippachse mit dem Schaltfinger schwenkbar. Mit Schwenken des Schaltfingers schwenkt die Sperrplatte in einen in Richtung der Kippachse sowie in Schwenkrichtung offenen Schlitz, der axial von zwei Anschlägen an einer von mindestens drei Schaltschienen ausgebildet ist. Wenn der Schaltfinger formschlüssig beweglich in eine benachbarte Schaltschiene eingreift, steht das Sperrglied axial zwischen den Anschlägen. Axiales Verschieben der gesperrten Schaltschiene ist somit nicht möglich. Zum Schalten der nicht gesperrten Schaltschiene wird die Schaltwelle mit Schaltfinger gegen das axial fixierte Sperrglied und relativ zu den mittels dem Sperrglied axial bewegungsfest gesperrten benachbarten Schaltschienen längs verschoben.

### Zusammenfassung der Erfindung

Zu dem Zeitpunkt, an dem die nachfolgend beschriebene Erfindung gemacht wurde, stand die Aufgabe, eine Sperrvorrichtung zu schaffen, die sich einfach und kostengünstig in einem Wechselgetriebe montieren lässt. Die Erfindung ist durch die Merkmale nach dem kennzeichnenden Teil des Anspruchs 1 gelöst.

Mit einer Ausgestaltung der Erfindung ist vorgesehen, dass das Sperrglied ein Sperrfinger ist.

Mit einer weiteren Ausgestaltung der Erfindung ist die Sperreinrichtung an der Lageranordnung des Schalthebels vorgesehen. Mindestens zwei jedoch zumeist drei oder vier Schaltschienen liegen nebeneinander im Schwenkbereich des Schaltfingers. In den in der Wählebene liegenden Ruhestellung sowie der Neutralstellung des Schalthebels stehen die Schaltschienen in einer mittleren neutralen Stellung. Die mittels der Schaltschiene, durch Längsverschieben der Schaltschienen, schaltbaren Gänge sind nicht geschaltet. Jede der Schaltschienen weist eine Eingriffsnut bzw. ein Schaltmaul für den Eingriff des Schaltfingers auf. Durch Wählbewegungen des Schalthebels in eine der Gassen, greift der Schaltfinger in eine der Schaltschienen ein. Eine gelenkige Verbindung zwischen der Schaltschiene und dem Schalthebel ist vorgenommen.

In der sich der Wählbewegung anschließenden Schaltbewegung, bei der der Schalthebel um die Schwenkachse schwenkt, wird die mit dem Schalthebel in Verbindung stehende Schaltschiene längs verschoben und einer der Gänge eingelegt. Während der Schaltbewegung des Schalthebels sind die anderen nicht mit dem Schalthebel im Eingriff stehenden Schaltschienen gegen Längsbewegungen zu sperren. Die Schaltschienen sind mittels der Lageranordnung nach dem Abschluss des Wählvorganges gesperrt. Dazu ist an der Konsole mindestens ein Sperrfinger ausgebildet. Dieser Sperrfinger greift dabei in einen an der Schaltschiene ausgebildeten Schlitz ein und setzt die Schaltschiene längs fest. Jede der Schaltschienen weist einen der Schlitze auf. Der Schlitz ist in Richtung des Sperrfingers sowie in Richtung des um die Kippachse schwenkenden Schalthebels offen. In der mittleren neutralen Stellung der Schaltschienen sind die Schaltschienen bzw. die Schlitze der Schaltschienen so zueinander ausgerichtet, dass die Schlitze in der Schwenkrichtung des Sperrfingers hintereinander liegen und zueinander ausgerichtet sind.

Der Sperrfinger schwenkt bei Wählbewegungen am Schalthebel mit der um die Kippachse schwenkenden Konsole und kann sich in seiner Schwenkrichtung durch die einander benachbart liegenden Schlitze frei hindurchbewegen, bis der Schaltfinger in eine der gewählten längsbeweglichen Schaltschienen sowie der Sperrfinger in den Schlitz oder die Schlitze einer festzusetzenden Schaltschiene formschlüssig eingreift. Die durch den Schaltfinger beaufschlagte Schaltschiene ist dabei von dem Sperrfinger nicht gesperrt und ist in Längsrichtung mittels des Schaltfingers frei beweglich. Bei Schwenkbewegungen des Schalthebels um die Schwenkachse zum Schalten von Gängen verbleibt der Sperrfinger in den Schlitzen der gesperrten Schaltschienen und hält diese während der Schaltvorgänge und während des Fahrbetriebes mit eingelegtem Gang in ihrer gesperrten Position.

Eine Ausgestaltung der Erfindung sieht vor, dass dem Schaltfinger zumindest drei der Schaltschienen zugeordnet sind. Der Sperrfinger greift in zwei der Schaltschienen gleichzeitig ein. Der Schaltfinger ist mit der zu schaltenden Schaltschiene formschlüssig verbunden. Steht der Schaltfinger nach dem Abschluss des Wählvorganges in einer Gasse, die einer zwischen zwei zu sperrenden Schaltschienen angeordneten Schaltschiene zugeordnet ist, sperrt der Sperrfinger die benachbarten Schaltschienen gleichzeitig. Eine Freimachung an dem Sperrfinger sichert ab, dass die gewählte Schaltschiene von dem Sperrfinger unberührt längs freibeweglich mittels des Schaltfingers schwenkbar ist. Die Freimachung steht über dem Schlitz der längs freibeweglichen Schaltschiene. Der Sperrfinger greift an dieser Schaltschiene somit nicht in den Schlitz ein. Die mit dem Schaltfinger bewegliche Schaltschiene durchdringt die Freimachung an dem Sperrfinger zu dem Sperrfinger somit berührungslos. Der Sperrfinger ist in seiner einfachsten Form ein flaches Blechteil. Das Blechteil steht entweder in einer gedachten von der Kippachse des Schalthebels senkrecht durchdrungenen Ebene einteilig mit der Wandung aus der Wandung der Konsole hervor oder ist an dieser gesondert befestigt. Der Sperrfinger ist in dieser Ebene dabei so breit, dass in jeder geschwenkten Position des Sperrfingers jede der zu sperrenden Schaltschienen mittels des Sperrfingers beaufschlagbar ist.

Die Konsole ist mittels des Schalthebels um eine quer zur Schwenkachse ausgerichtete Kippachse an einem zum Fahrzeug festen Gehäuse schwenkbar gelagert. Die Kippachse fluchtete mit der Mittelachse von wahlweise einem oder zwei Kippbolzen. Die Kippbolzen lagern die Konsole in der Wählebene, jedoch nicht in der Schaltebene, schwenkbar an dem Gehäuse. Der Schalthebel ist in der Wählebene, zur Konsole unbeweglich, mit der Konsole um die Kippachse schwenkbar. Bei einer Wählbewegung an dem Schaltfinger nimmt der um die Kippachse schwenkende Schalthebel die Konsole mit. Der Schaltfinger ist an einer zum Schaltangriff wegweisenden Seite, vorzugsweise an der entgegengesetzten Seite, der Kippachse am Schalthebel angeordnet und schwenkt mit dem Schalthebel in der Wählebene um die Kippachse.

In der Vorrichtung gemäß Erfindung stehen die Eingriffsnuten in der mittleren neutralen Stellung der Schaltschiene in die Wählrichtungen in einer Linie zueinander ausgerichtet. Der Schaltfinger kann in der Wählebene ungehindert durch die Eingriffsnuten hindurch schwenken, bis die Ruhestellung des Schalthebels erreicht ist und der Schalthebel in eine der Eingriffsnuten eingreift.

Die Lageranordnung des Schalthebels sieht weiterhin die schwenkbare Lagerung des Schalthebels in der Schaltebene um eine Schwenkachse in der Konsole vor. Die Schwenkachse verläuft quer zur Kippachse. Die Schwenkachse fluchtet mit den Zentren von sich zwei in der Konsole gegenüberliegenden Lageraugen oder wahlweise mit einem in der Konsole ausgebildeten Lagerauge. Der Schalthebel ist dabei um einen in dem/den Lagerauge(n) gelagerten Schwenkbolzen in der Schaltebene, jedoch nicht in der Wählebene, schwenkbar an der Konsole gelagert. Der Schaltknauf und der Schaltfinger weisen jeweils in eine andere Richtung von der Schwenkachse weg. Bei den Schaltbewegungen ist der Schalthebel über den Schaltfinger mit einer der Eingriffsnuten einer Schaltschiene beweglich gekoppelt. Die Schaltbewegung bewirkt das Verschieben der Schaltschiene. Der Schaltfinger beaufschlagt dabei eine der in Verschieberichtung der Schaltschiene liegenden Flanke der Eingriffsnut. Einer der Schaltschiene zugeordneten Gänge wird durch das Verschieben der Schaltschiene eingelegt.

Mit einer Ausgestaltung der Erfindung ist vorgesehen, dass die Kippachse und die Schwenkachse des Schalthebels zueinander beabstandet verlaufen.

Die Schwenkachse und die Kippachse liegen erfindungsgemäß horizontal auf unterschiedlichen und vertikal, je nach Ausführung der Lageranordnung, in einer gemeinsamen oder in unterschiedlichen Ebenen. Die Schwenkachse und die Kippachse liegen dabei zwischen dem Kraftangriff am Schaltknauf und dem Schaltfinger. Schwenkbewegungen um die dem Schaltfinger am nächsten liegende der Achsen resultieren am Schaltknauf sowie an jedem der sich in Richtung dieser Achse an dem Schaltknauf anschließenden Punkte des Schalthebels in einem längeren zurückgelegten Weg im Bogenmaß, wenn die Schaltvorrichtung sowohl die Wähl- als auch die Schaltbewegungen auf einen gleichen Schwenkwinkel begrenzt.

Mit einer Ausgestaltung der Erfindung ist vorgesehen, dass die Kippbolzen drehfest in dem Gehäuse aufgenommen sind. Die Konsole ist um die Kippbolzen schwenkbar. In jedem der Lageraugen der Konsole ist ein Gleitlager zwischen dem Kippbolzen und der Konsole angeordnet. Alternativ dazu sitzt der Kippbolzen ohne gesonderte Lagerung passgenau in dem Lagerauge der Konsole. Der Schalthebel ist entweder schwenkbar um den zur Konsole bewegungsfesten Schwenkbolzen gelagert oder der Schwenkbolzen sitzt fest in dem Schalthebel und bewegt sich in Lageraugen der Konsole. Alternativ sind die Lagerungen des Schalthebels auf dem Schwenkbolzen oder die Lagerungen des Schwenkbolzens in der Konsole mit Gleitlagern versehen.

### Kurze Beschreibung der Zeichnungen

Die Erfindung wird nachfolgend anhand von Ausführungsbeispielen näher erläutert. Es zeigen:

Figuren 1 bis 9 ein Ausführungsbeispiel einer Lageranordnung gemäß Erfindung in verschiedenen Ansichten und Schnittdarstellungen. Im Einzelnen zeigt:
- Figur 1: eine Gesamtansicht der Lageranordnung,
- Figur 2: einen Längsschnitt durch die Lageranordnung,
- Figur 2a: das Schaltschema der Stellungen des Schalthebels,
- Figur 3: einen Querschnitt der Lageranordnung,
- Figur 4: eine schematische Darstellung der Lage der Kippachse und der Schwenkachse zu dem Schalthebel,
- Figur 5: einen Längsschnitt durch die Lageranordnung mit dem um die Kippachse in eine Wählrichtung geschwenkten Schalthebel,
- Figur 6: einen Querschnitt durch die Vorrichtung mit dem um die Schwenkachse in eine Schaltstellung geschwenkten Schalthebel,
- Figur 7: eine Gesamtansicht der Lageranordnung ohne das Gehäuse,
- Figur 8a: eine Ansicht der Lageranordnung von unten in der Neutralstellung des Schalthebels,
- Figur 8b: eine Ansicht der Lageranordnung von unten mit dem in die Gasse des Rückwärtsganges geschwenkten Schalthebel und
- Figur 9: eine Seitenansicht der Lageranordnung mit dem Sperrfinger und
- Figur 10: ein weiteres Ausführungsbeispiel einer erfindungsgemäßen Lageranordnung ohne Gehäuse.

### Detaillierte Beschreibung der Zeichnungen

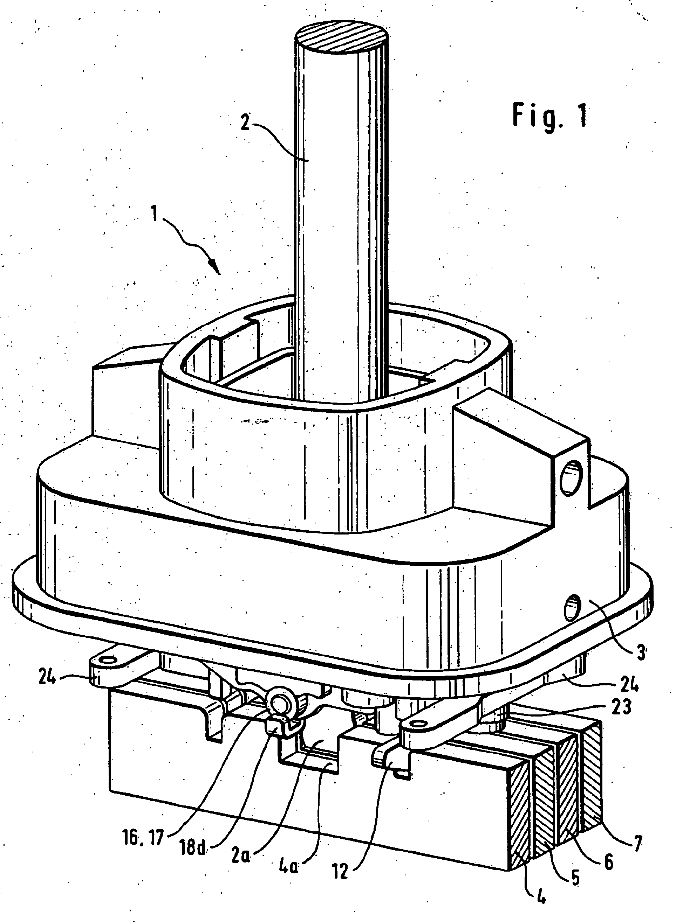

Figur 1 zeigt eine Gesamtansicht eines Ausführungsbeispieles einer Lageranordnung 1. In der Lageranordnung 1 ist ein Schalthebel 2 gelagert. Die Lageranordnung 1 ist in einem Gehäuse 3 aufgenommen. Der Schalthebel 2 wirkt mit einem Schaltfinger 2a wahlweise auf Schaltschienen 4, 5, 6 und 7. Die Schaltschienen 4, 5, 6 und 7 sind jeweils mit einer Eingriffsnut 4a, 5a, 6a, 7a versehen, in die der Schalthebel 2 in Abhängigkeit von seiner Wählposition eingreift.

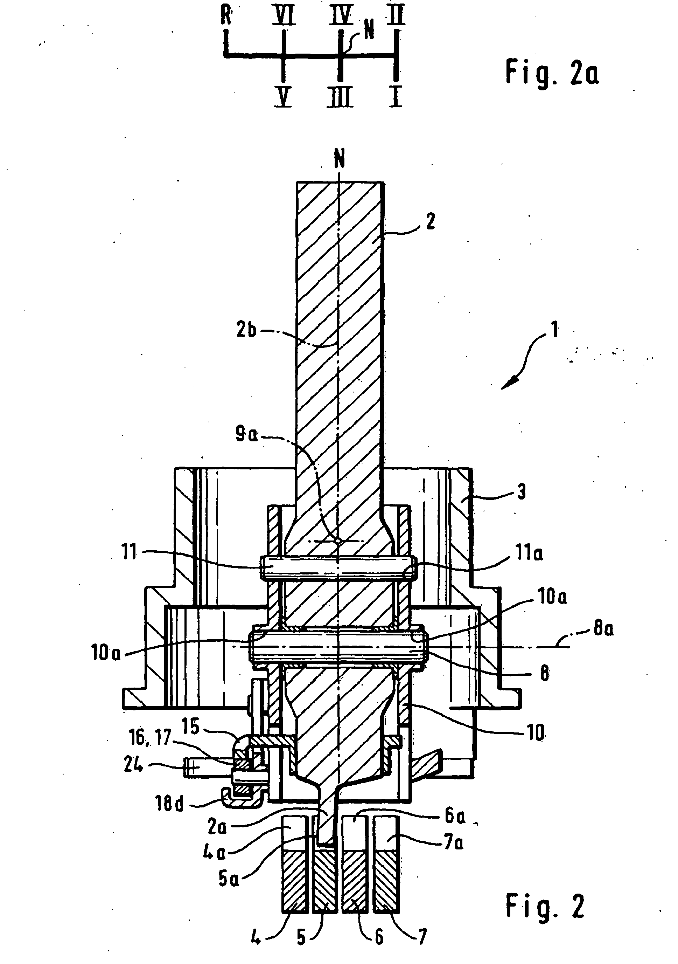

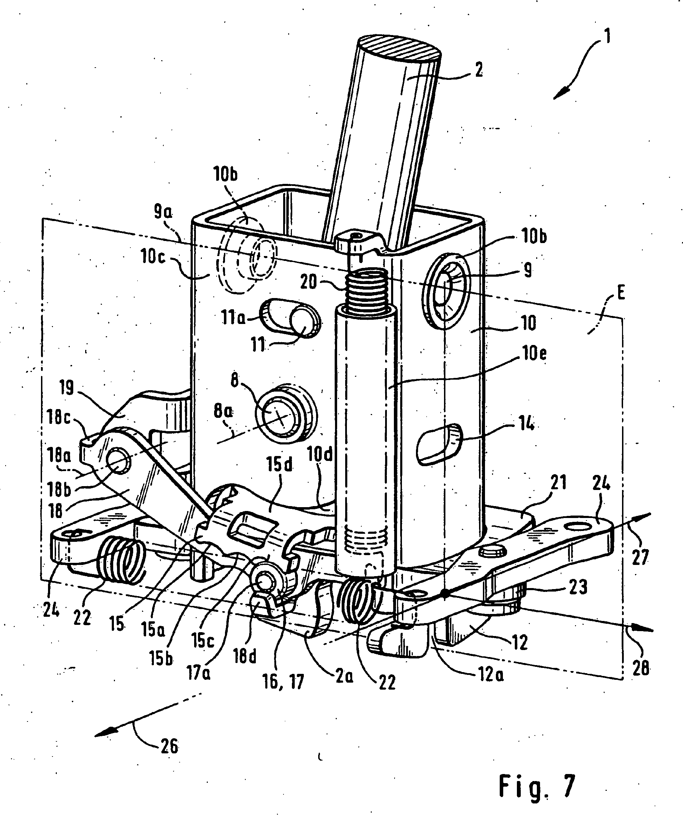

In Figur 2 ist die Lageranordnung 1 geschnitten dargestellt. Der Schalthebel 2 steht in der Neutralstellung N. Der Schaltfinger 2a verläuft leicht zu der in der Neutralstellung stehenden Mittelachse 2b des Schaltfingers 2 abgewinkelt und greift in die Eingriffsnut 5a der Schaltschiene 5 ein. Die Schaltschienen 4, 5, 6 und 7 stehen in einer neutralen Mittelstellung. In dieser neutralen Mittelstellung sind die Eingriffsnuten 4a, 5a, 6a und 7a in Schwenkrichtung des Schalthebels 2 hintereinander sowie zueinander ausgerichtet. Der Schalthebel 2 ist aus der neutralen Stellung N um die senkrecht zu der Darstellung verlaufende Kippachse 9a schwenkbar in der Lageranordnung 1 angeordnet. Der Schaltfinger 2a ist beim Schwenken des Schalthebels 2 um die Kippachse 2a innerhalb der Eingriffsnuten 4a, 5, 6a und 7a frei beweglich schwenkbar. Der Schalthebel 2 ist in einer Konsole 10 auf einem Schwenkbolzen 8 um die Schwenkachse 8a schwenkbar gelagert. Der Schwenkbolzen 8 sitzt fest in Lageraugen 10a der Konsole 10. In dem Schalthebel 2 ist weiterhin ein Anschlag 11 in Form eines Stiftes befestigt. Mit dem Anschlag 11 wird der Schwenkwinkel des Schalthebels 2 um die Schwenkachse 8a in einem sich in Schwenkrichtung erstreckendem Langloch 11a begrenzt (siehe auch Figur 7).

Aus der neutralen Stellung N ist der Schalthebel 2 um die Schwenkachse 8a mit dem Schaltfinger 2a schwenkbar. Der Schaltfinger 2a beaufschlagt dabei eine in Schwenkrichtung liegende Flanke der Eingriffsnut 5a. Die Schaltschiene 5 ist einer Gasse zugeordnet, aus der der dritte und vierte Gang durch Schwenken des Schalthebels 2 schaltbar sind. Figur 2a zeigt das Schaltschema zu den Wähl- oder Schaltstellungen des Schaltknaufes 2c. Aus der Gasse III-IV ist der Schalthebel 2 um die Kippachse 9a in Richtung der Gasse I-II schwenkbar. In der Gasse I-II greift der Schaltfinger 2a in die Schaltschiene 4 ein. Mit der Schaltschiene 4 ist der erste oder zweite Gang mittels des um die Schwenkachse 8a schwenkenden Schalthebels 2 schaltbar. Der um die Kippachse 9a in die Gasse VI-V geschwenkte Schaltfinger 2a greift in die Schaltschiene 6 ein. Mit einem Schwenken des Schalthebels 2 um die Schwenkachse 8a ist wahlweise der vierte oder fünfte Gang schaltbar. Bei einer Schwenkbewegung des Schalthebels um die Kippachse 9a über die Gasse VI-V hinaus wird die Gasse des Rückwärtsganges R angewählt. Der Schaltfinger 2a greift dabei in die Eingriffsnut 7a der Schaltschiene 7 ein. Durch Schwenken des Schalthebels 2 um die Schwenkachse 8a ist der Rückwärtsgang aus dieser Position schaltbar.

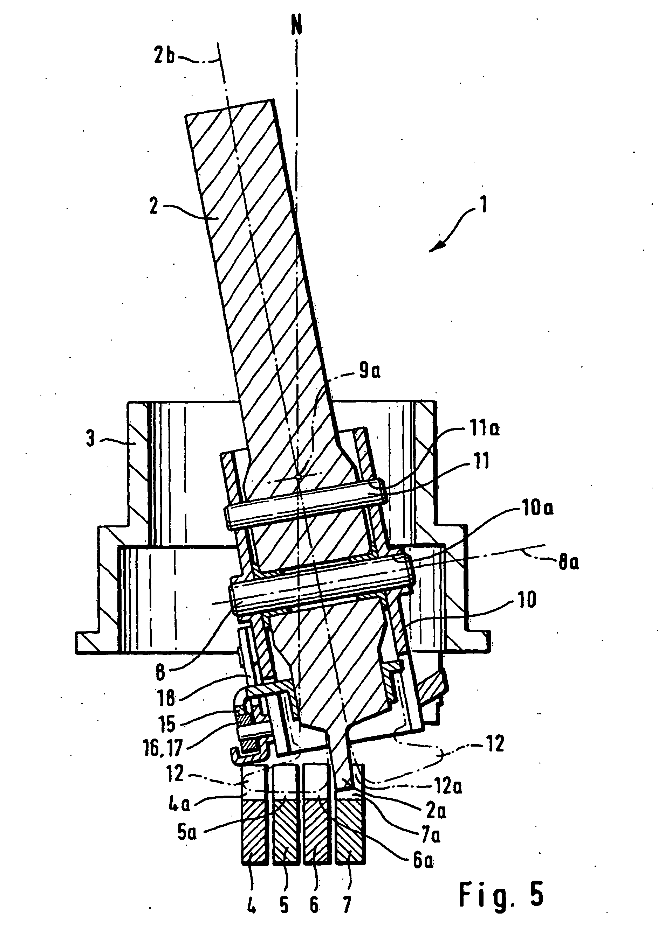

In Figur 5 zeigt den gleichen Schnitt wie in Figur 2. Der Schalthebel 2 ist jedoch durch Schwenken um die Kippachse 9a in die Gasse des Rückwärtsganges R bewegt. Der Schaltfinger 2a greift dazu in die Eingriffsnut 7a der Schaltschiene 7 ein. Aus dieser Position ist der Schalthebel 2 um die Schwenkachse 8a schwenkbar. Der mit dem Schalthebel 2 schwenkende Schaltfinger 2a nimmt dabei die Schaltschiene 7 in ihrer Längsrichtung mit, bis der Rückwärtsgang R eingelegt ist.

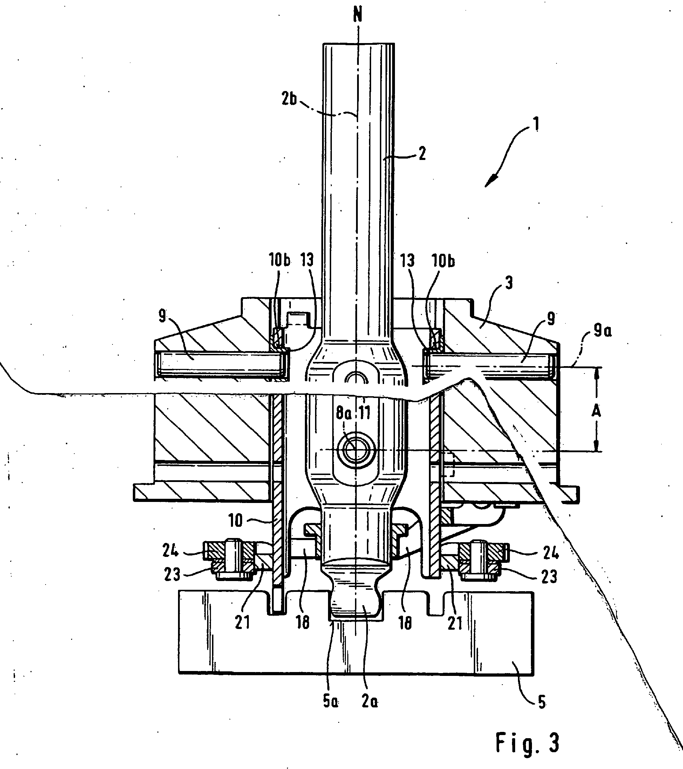

Figur 3 zeigt einen Querschnitt der Lageranordnung 1. Der Schalthebel 2 steht in der Neutralstellung und greift mit seinem Schaltfinger 2a in die Schaltschiene 5 ein. In dieser Ansicht ist die Schaltschiene 4 durch die Schaltschiene 5 verdeckt. Der Schaltfinger ist über den Eingriff in die Eingriffsnut 5a formschlüssig mit der Schaltschiene 5 gekoppelt. Aus der Neutralstellung ist der Schalthebel 2 um die Kippachse 9a und die Schwenkachse 8a schwenkbar. Die Kippachse 9a ist die Mittellinie von zwei Kippbolzen 9. Die Kippbolzen 9 sind in dem Gehäuse 3 fest angeordnet und greifen jeweils in ein Lagerauge 10b der Konsole 10. Die Konsole 10 ist durch den Schalthebel 2 mittels Gleitlagern 13 in dem Lagerauge 10b auf dem Kippbolzen 9 gelagert. Die Schwenkachse 8a und die Kippachse 9a verlaufen mit dem Abstand A zueinander beabstandet sowie quer zueinander. Dabei liegt die Schwenkachse 8a dem Schaltfinger 2a am nächsten.

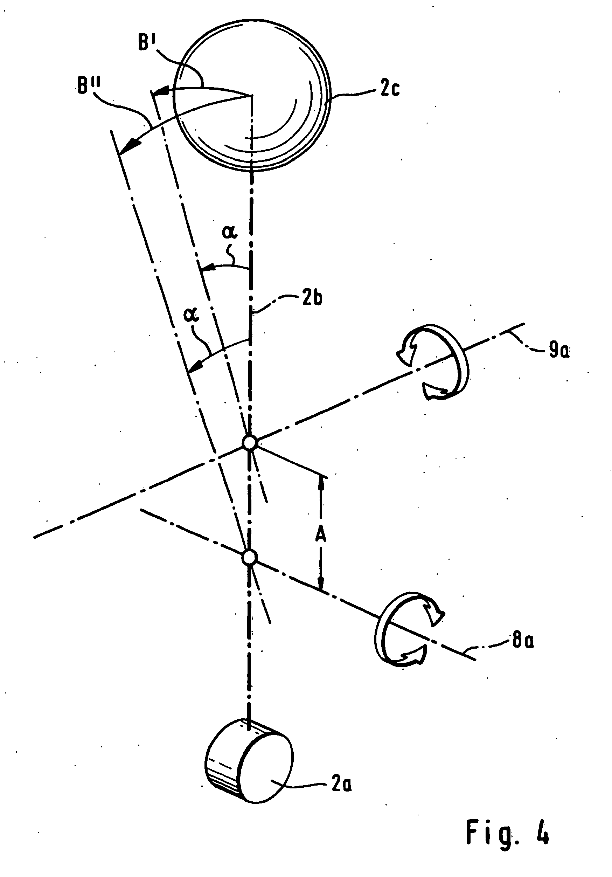

Figur 4, eine schematischen Darstellung des Schalthebels 2 mit den Achsen 8a, 9a zeigt, dass mittels der zueinander um den Abstand A beabstandeten Achsen 8a, 9a unterschiedliche Wähl- und Schaltwege am Schaltknauf 2c des Schalthebels erzielt werden. Der Schaltknauf 2c legt bei einem um die Kippachse 9a mit dem Schwenkwinkel α geschwenkten Schalthebel 2 den Weg B' im Bogenmaß zurück. Wenn der Schalthebel 2 um die Schwenkachse 8a mit dem gleichen Winkel α geschwenkt wird, legt der Schaltknauf 2c den Weg B" im Bogenmaß zurück. B" ist aufgrund des Abstandes A zwischen der Achse 8a und der Achse 9a größer als B'.

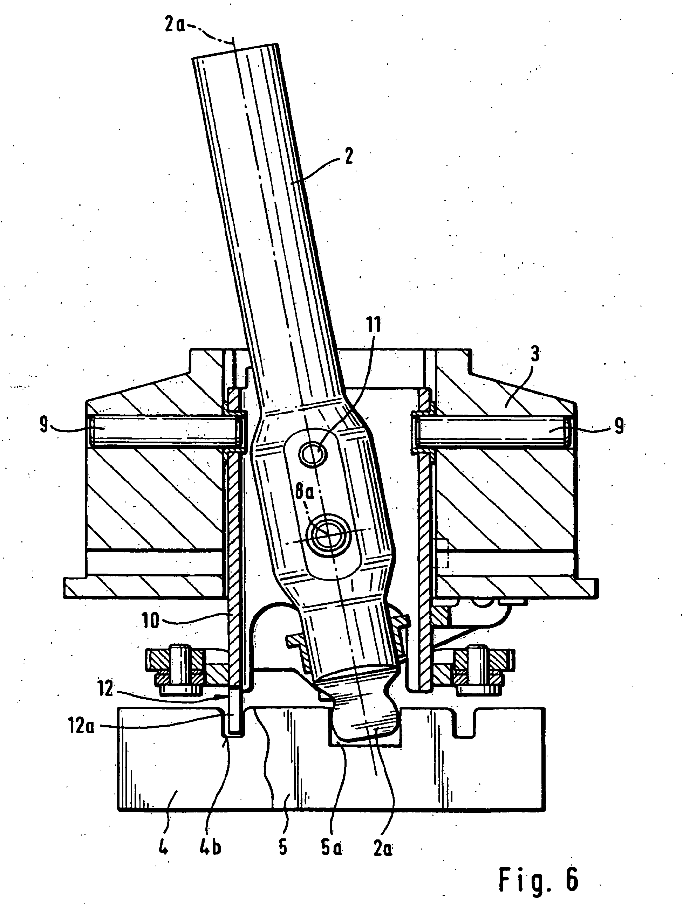

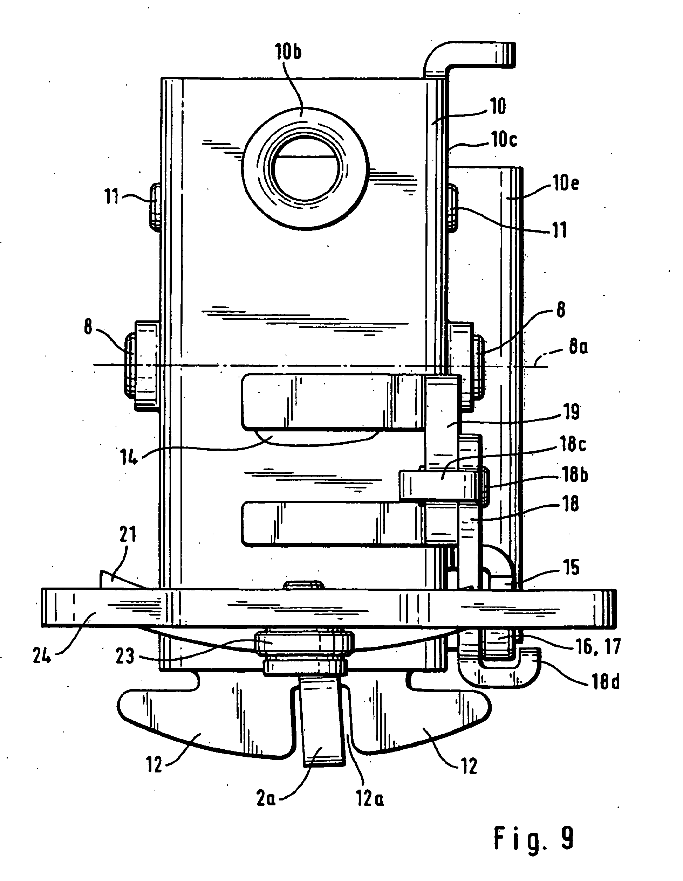

Figur 6 zeigt die Lageranordnung 1 in der gleichen Schnittdarstellung wie in Figur 3. Der Schalthebel 2a ist um die Schwenkachse 8a in eine Schaltstellung geschwenkt und hat dabei mittels des Schaltfingers 2a die Schaltschiene 5 in ihre Längsrichtung verschoben. Die Schaltschiene 4 verbleibt dabei unverändert in ihrer Position. In dieser Position ist die Schaltschiene 4 mittels eines Sperrfingers 12 an der Konsole 10 festgesetzt. Der Sperrfinger 12 greift dazu in einen Schlitz 4b an der Schaltschiene 4. In Figur 5 ist der Sperrfinger 12 in einer Vorderansicht zumindest teilweise dargestellt. Der Sperrfinger 12 ist mittels einer Freimachung 12a geteilt. Durch die Freimachung 12a ist die Schaltschiene 5 in der nach Figur 6 dargestellten Anordnung berührungslos zu dem Schaltfinger 12 hindurch verschiebbar. Wie aus der Ansicht in Figur 5 ersichtlich ist, schwenkt der Sperrfinger 12 mit dem Schaltfinger um die Kippachse 9a, wenn mit dem Schalthebel 2 eine der Gassen gewählt wird. In Figur 5 gibt der Sperrfinger 12 mittels der Freimachung 12a die Schaltschiene 7 für das Schalten des Rückwärtsganges und in Figur 6 die Schaltschiene 5 für das Schalten eines der Schaltschiene 5 zugeordneten Gänge frei. Figur 9 zeigt die Konsole 10 mit dem Sperrfinger 12 ohne die Schaltschienen. Die Schaltfinger 2a ist in Richtung der Freimachung 12a um die Schwenkachse 8a schwenkbar, so dass jede der mit dem Schaltfinger 2a im Eingriff stehende Schaltschiene zu dem Sperrfinger 12 berührungslos durch die Freimachung 12a verschiebbar ist.

Figur 7 zeigt die Lageranordnung 1 ohne das Gehäuse 3. Die Konsole 10 ist aus einem Profil gefertigt bzw. aus einem Blech zu einem Profil gebogen. In die Konsole sind Langlöcher 11a und 14 eingebracht. In das Langloch 11a greift, wie anfangs schon beschrieben, der Anschlag 11 ein. Der Anschlag 11 geht von dem Schalthebel 2 aus. Mittels des Anschlages 11 in dem Langloch 11 a ist der Schwenkwinkel des Schalthebels 2 um den Schenkbolzen 8 in der Konsole 10 begrenzt. Der Anschlag 11 liegt an jeweils einem Ende des Langloches 11a an, wenn ein Gang geschaltet ist. In das Langloch 14 greift ein von dem Gehäuse 3 ausgehender und nicht dargestellter Anschlag ein. Mittels des Anschlages in dem Langloch 14 ist die Schwenkbewegung der Konsole 10 zu dem Gehäuse um den Kippbolzen 9 begrenzt.

Die Lageranordnung 1 weist eine Rastkontur 15 mit Rastvertiefungen 15a, 15b und 15c auf. Die Rastkontur 15 ist aus Blech ausgeformt. Das Blech ist winkelförmig abgebogen und mittels einer von der Rastkontur 15 abgehenden Verlängerung 15d an dem Schalthebel 2 befestigt. Die Verlängerung 15d durchgreift dabei eine von der Schwenkachse 8a des Schalthebels 2 durchdrungene Wand 10c der Konsole 10 an einer Öffnung 10d der Wand. Gegen die Rastkontur 15 ist ein Rastelement 16 vorgespannt. Das Rastelement 16 ist eine Rolle 17. Die Rolle 17 sitzt drehbar auf einem Bolzen 17a. Der Bolzen 17a ist an einem Kipphebel 18 befestigt. Der Kipphebel 18 ist um den Kipppunkt 18a auf einem Bolzen 18b schwenkbar befestigt. Der Bolzen 18b ist an einem mit der Kippachse 9a gleichgerichteten und von der Rotationsachse der Rolle 17 wegweisenden Vorsprung 19 befestigt. Der Kipphebel 18 ist aus Blech gebildet und weist ein hakenförmiges Ende 18c auf. Das hakenförmige Ende 18c hintergreift den Vorsprung 19 an einer von dem Kipphebel 18 abgewandten Seite. Damit ist der Kipphebel 18 auf dem Bolzen 18b axial an dem Vorsprung 19 gesichert. Die um ihre Rotationsachse an dem Kipphebel 18 beweglich gelagerte Rolle 17 ist mittels eines weiteren hakenförmigen Endes 18d an dem Kipphebel 18 gesichert. Dabei hintergreift das hakenförmige Ende 18d die Rolle 17 an einer von dem Kipphebel 18 abgewandten Seite.

Der Kipphebel 18 ist an einem dem Kipppunkt 18a abgewandten Ende mit einer Feder 20 belastet. Die Feder 20 ist eine Zugfeder und ist mir ihrem einen Ende an dem Kipphebel 18 sowie mit dem anderen Ende an der Konsole 10 eingehängt. Die Feder 20 zieht den Kipphebel 18 mit der Rolle 17 gegen die Rastkontur 15 und ist dabei in einer Hülse 10e an der Konsole 10 geführt. Der Schalthebel 2 steht in Figur 7, um die Schwenkachse 8a geschwenkt, in einer geschalteten Stellung. Der Anschlag 11 liegt an einem Ende des Langloches 11a an. In dieser Stellung ist die Rolle 17 in der Rastvertiefung 15c eingerastet und arretiert den Schalthebel 2 in seiner Stellung. Wird der Schalthebel 2 gegensinnig zu seiner jetzigen Schwenkstellung um die Schwenkachse 8a geschwenkt, steigt die Rolle 17 aus der Rastvertiefung 15c auf und verrastet zunächst in der Rastvertiefung 15b. In dieser Stellung steht der Schalthebel 2 entweder in der Neutralstellung oder in einer der Ruhestellungen der Gassen vor dem Schalten eines Ganges. Wird der Rasthebel 2 in diese Richtung weiter geschwenkt, verrastet die Rolle 17 schließlich in der Rastvertiefung 15a und arretiert den Schalthebel 2 in einer weiteren Schaltstellung.

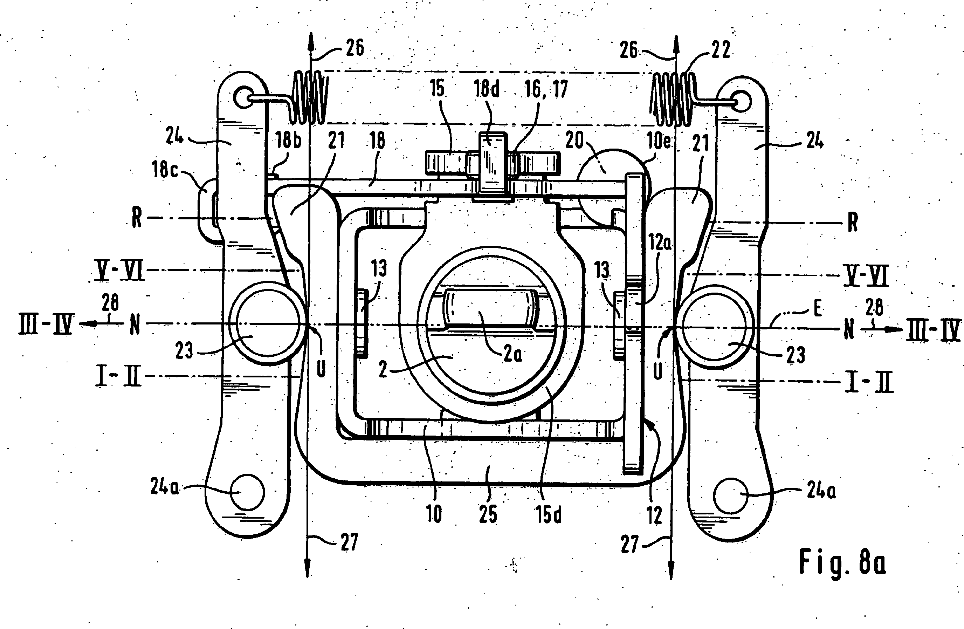

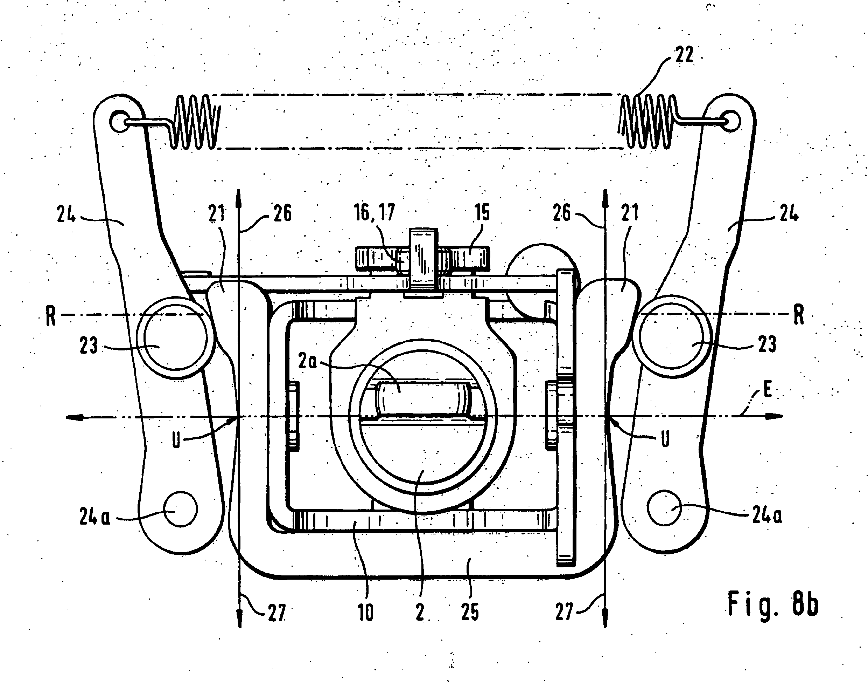

Die Lageranordnung 1 weist eine Vorrichtung zum Erhöhen von Wählkräften auf. Wie aus den Figuren 8a und 8b zu entnehmen ist, ist die Vorrichtung aus zwei Rampen 21, jeweils einer gegen die Rampe mittels einer Feder 22 vorgespannten Ablaufrolle 23 sowie zwei Hebeln 24 gebildet. Die Rampen 21 sind an einem bügelförmigen Blech 25 ausgebildet. Das Blech 25 ist an der Konsole 10 befestigt. Die Hebel 24 sind jeweils um einen zum nicht dargestellten Gehäuse festen Drehpunkt 24a in Richtung der Konsole 10 schwenkbar angeordnet. Jede der Ablaufrollen 23 ist drehbar an einem der Hebel 24 angeordnet. Die Zugfeder 22 ist jeweils mit einem ihrer Enden an einem zu dem Drehpunkt 24a entgegengesetzten Ende des Hebels 24 eingehakt. Die Hebel 24 sind mittels der Zugfeder gegeneinander und somit gegen die Konsole 10 vorgespannt. Dabei wird jeweils eine der Rollen 23 über die Hebel 24 gegen jeweils eine der Rampen 21 gezogen.

Die Rampen 21 sind in Abschnitte unterschiedlichen Anstieges eingeteilt und weisen zueinander die gleiche Rampenkontur auf. Die Kontur einer jeden Rampe 21 steigt über zwei in entgegengesetzte Richtung weisenden Abszissen 26, 27 von einem Koordinatenursprung U ausgehend an. Die Abszissen 26 und 27 gehen quer von einer gedachten Ebene E ab und sind somit parallel zur Schwenkachse 8a des Schalthebels 2 ausgerichtet (Figur 7, Figur 8a, Figur 8b). Die Ebene E verläuft mit der Kippachse 9a des Schalthebels 2 und ist rechtwinklig von der Schwenkachse 8a des Schalthebels 2 durchdrungen. Der Koordinatenursprung U liegt in der Ebene E. Ein um die Kippachse 9a geschwenkter Schalthebel 2 schwenkt die Konsole 10 mit der Rampe 21 gegen die in Schwenkrichtung feste Ablaufrolle 23. Die Kontur der Rampen 21 bewegt sich in Schwenkrichtung zu der Rotationsachse der Ablaufrolle 23, wodurch die gegen die Rampe 21 vorgespannte jeweilige Ablaufrolle 23 an der Rampe 21 aufsteigend abrollt. Die rechtwinklig zu den Abszissen 26 und 27 ausgerichtete Ordinate 28 verläuft parallel zu der Kippachse 9a mit der Ebene E.

Da die Rampe 21 beidseitig des Koordinatenursprungs U von der Ebene E weg ansteigt, zentriert sich jeweils eine Rolle 23 an einer Rampe 21 in der Neutralstellung N des Schalthebels an dem Koordinatenursprung U. Die Rampe 21 verläuft sowohl über der Abszisse 26 als auch über der Abszisse 27 anfangs flach ansteigend. Die an den Abschnitten mit dem flachen Anstieg aufsteigenden Ablaufrollen 23 erzeugen an dem zum Wählen einer Gasse mit Vorwärtsgängen geschwenkten Schalthebel 2 eine relativ geringe Wählkraft. Beim Schalten eines der Gänge aus den Gassen verharren die Ablaufrollen 23 jeweils in einer der mit I-II oder V-VI gekennzeichneten Positionen auf der jeweiligen Rampe 21. In diesen Positionen steht der Schalthebel 2 in einer der Gassen I-II oder V-VI, aus der dann in der jeweiligen Gasse durch Schwenken des Schaltfingers 2 ein Gang schaltbar ist. Wird der Schalthebel 2 mit der Konsole 10 über die Position V-VI weiter hinausgeschwenkt, so trifft die an der Rampe 21 aufsteigende Ablaufrolle 23 auf einen Abschnitt der Rampe 21 der stark von der Abszisse 26 weg abgeknickt ansteigt. An der Konsole 10 und somit an dem Schalthebel 2 wird aufgrund des steilen Anstieges eine Wählkraft erzeugt, die deutlich über der Wählkraft zur Wahl der Vorwärtsgänge liegt. Der Schalthebel 2 ist im Begriff sich in die Gasse zum Schalten des Rückwärtsganges R zu bewegen. Dem steilen Anstieg an der Rampe 21 folgt schließlich bis in die Position R wieder ein flacher Anstieg. Steht die Ablaufrolle 23 in der Position R ist die Gasse des Rückwärtsganges R gewählt. Diese Stellung ist in der Figur 8b zeichnerisch dargestellt. Aus der Stellung R ist der Schalthebel 2 um die Schwenkachse 8a zum Schalten des Rückwärtsganges R schwenkbar.

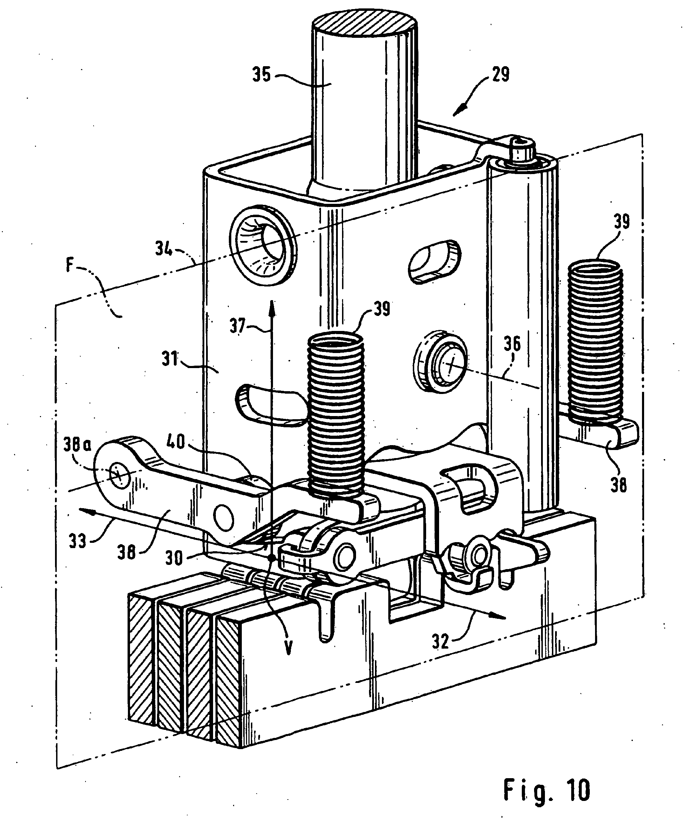

Figur 10 zeigt ein weiteres Ausführungsbeispiel einer erfindungsgemäßen Lageranordnung. Die Lageranordnung 29 ist ohne Gehäuse dargestellt. Ihr Aufbau entspricht im Wesentlichen der Lageranordnung 1 nach den Figuren 1 bis 9. Sie unterscheidet sich in ihrem Aufbau jedoch von der Anordnung der Vorrichtung zum Erhöhen der Wählkraft. Die Lageranordnung 29 weist zwei Rampen 30 auf, von denen eine zeichnerisch dargestellt und die andere durch eine Konsole 31 verdeckt ist. Die Rampe 30 steigt wie in dem vorgenannten Beispiel über zwei in entgegengesetzte Richtungen weisenden Abszissen 32 und 33 an. Die Abszissen gehen rechtwinklig von einer gedachten, mit der Kippachse 34 des Schalthebels 35 verlaufenden sowie senkrecht von der Schwenkachse 36 des Schalthebels 35 durchdrungenen Ebene F ab. Der Koordinatenursprung V des Koordinatensystems liegt in der Ebene F. Von dem Koordinatenursprung V geht rechtwinklig zu den Abszissen 32 und 33 eine mit der Ebene F verlaufende Ordinate 37 ab. Die Rampe 30 steigt über den Abszissen 32 von dem Koordinatenursprung V aus an und ist somit der Kippachse 34 zugewandt. Jeweils ein um einen Drehpunkt 38a schwenkbar zu dem nicht dargestellten Gehäuse gelagerter Hebel 38 ist mittels einer Druckfeder 39 gegen jeweils eine Rampe 30 vorgespannt. An jedem der Hebel 38 ist eine Ablaufrolle 39 drehbar befestigt. Jede der Federn 39 ist eine Druckfeder und drückt die jeweils einen der Hebel 38 mit der Ablaufrolle 40 gegen die Rampe 30. Der um die Kippachse 34 mit der Konsole 31 geschwenkte Schalthebel 35 schwenkt die Rampen 30 gegen die in Bewegungsrichtung der Rampe 30 an dem Hebel 38 feste Ablaufrolle 40. Die Ablaufrolle 40 steigt, an der Rampe 30 abrollend, an der Rampe 30 auf.

### Bezugszeichen

- 1: Lageranordnung
- 2: Schalthebel
- 2a: Schaltfinger
- 2b: Mittelachse
- 2c: Schaltknauf
- 3: Gehäuse
- 4: Schaltschiene
- 4a: Eingriffsnut
- 4b: Schlitz
- 5: Schaltschiene
- 5a: Eingriffsnut
- 6: Schaltschiene
- 6a: Eingriffsnut
- 7: Schaltschiene
- 7a: Eingriffsnut
- 8: Schwenkbolzen
- 8a: Schwenkachse
- 9: Kippbolzen
- 9a: Kippachse
- 10: Konsole
- 10a: Lagerauge
- 10b: Lagerauge
- 10c: Wand
- 10d: Öffnung
- 10e: Hülse
- 11: Anschlag
- 11a: Langloch
- 12: Sperrfinger
- 12a: Freimachung
- 13: Gleitlager
- 14: Langloch
- 15: Rastkontur
- 15a: Rastvertiefung
- 15b: Rastvertiefung
- 15c: Rastvertiefung
- 15d: Verlängerung
- 16: Rastelement
- 17: Rolle
- 17a: Bolzen
- 18: Kipphebel
- 18a: Kipppunkt
- 18b: Bolzen
- 18c: Ende
- 18d: Ende
- 19: Vorsprung
- 20: Feder
- 21: Rampe
- 22: Feder
- 23: Ablaufrolle
- 24: Hebel
- 24a: Drehpunkt
- 25: Blech
- 26: Abszisse
- 27: Abszisse
- 28: Ordinate
- 29: Lageranordnung
- 30: Rampe
- 31: Konsole
- 32: Abszisse
- 33: Abszisse
- 34: Kippachse
- 35: Schalthebel
- 36: Schwenkachse
- 37: Ordinate
- 38: Hebel
- 38a: Drehpunkt
- 39: Feder
- 40: Ablaufrolle

## Patentansprüche

1. Sperreinrichtung mit einem Sperrglied zum wahlweisen Sperren wenigstens einer mittels einem Schaltfinger (2a) betätigten ersten Schaltschiene (4, 5, 6, 7) sowie einer zweiten Schaltschiene (4, 5, 6, 7), wobei der um eine Kippachse (9a, 34) geschwenkte Schaltfinger (2a) formschlüssig beweglich wahlweise in eine der Schaltschienen (4, 5, 6, 7) eingreift und wobei die Schaltschiene (4, 5, 6, 7), in die der Schaltfinger (2a) eingreift, mittels des Schaltfingers (2a) in mindestens eine Richtung längs verschiebbar ist und wobei die erste Schaltschiene (4, 5, 6, 7) mittels des Sperrgliedes zu der zweiten Schaltschiene (4, 5, 6, 7) längs festgesetzt ist, wenn der um die Kippachse (9a, 34) geschwenkte Schaltfinger (2a) formschlüssig beweglich in die zweite Schaltschiene (4, 5, 6, 7) eingreift wobei das Sperrglied wahlweise in einen in Richtung der Kippachse (9a, 34) sowie in die Schwenkrichtungen des um die Kippachse (9a, 34) geschwenkten Sperrgliedes offenen Schlitz (4b) an einer der Schaltschienen (4, 5, 6, 7) formschlüssig eingreift und daß die erste Schaltschiene (4, 5, 6, 7) mittels des Sperrgliedes zu der zweiten Schaltschiene (4, 5, 6, 7) längs festgesetzt ist, wenn der um die Kippachse (9a, 34) geschwenkte Schaltfinger (2a) formschlüssig beweglich in die zweite Schaltschiene (4, 5, 6, 7) eingreift, wobei die zweite Schaltschiene (4, 5, 6, 7) mittels des Sperrgliedes zu der ersten Schaltschiene (4, 5, 6, 7) längs festgesetzt ist, wenn der um die Kippachse (9a, 34) geschwenkte Schaltfinger (2a) formschlüssig beweglich in die erste Schaltschiene (4, 5, 6, 7) eingreift und wobei das um die Kippachse (9a, 34) schwenkende Sperrglied in den in Schwenkrichtung des Sperrgliedes hintereinander liegenden und zueinander ausgerichteten Schlitzen (4b) solange schwenkbar ist, bis der Schaltfinger (2a) in eine der gewählten längs beweglichen Schaltschienen (4, 5, 6, 7) sowie das Sperrglied in den Schlitz (4b) von zumindest einer festzusetzenden Schaltschiene (4, 5, 6, 7) formschlüssig eingreifen, **dadurch gekennzeichnet, dass** das Sperrglied von einer Konsole (10, 31) aus in wenigstens einen der Schlitzen (4b) formschlüssig eingreift, wobei die Konsole (10, 31) einen Schalthebel (2, 35) um eine Schwenkachse (8a, 36) zu der Konsole (10, 31) schwenkbar in einer Lageranordnung (1, 29) lagert und wobei die Lageranordnung (1, 29) den Schalthebel (2, 35) mit der Konsole (10, 31) um eine quer zur Schwenkachse (8a, 36) ausgerichtete Kippachse (9a, 34) schwenkbar zu einem Gehäuse (3) lagert und dass der Schalthebel (2, 35) an einem freien Ende den um die Kippachse (9a, 34) sowie die Schwenkachse (8a, 36) schwenkbaren Schaltfinger (2a) aufweist.

2. Sperreinrichtung nach Anspruch 1, **dadurch gekennzeichnet, dass** das Sperrglied ein Sperrfinger (12) ist.

3. Sperreinrichtung nach Anspruch 2, **dadurch gekennzeichnet, dass** dem Schaltfinger (4, 5, 6, 7) zumindest drei der Schaltschienen (4, 5, 6, 7) zugeordnet sind, wobei der Sperrfinger (12) in zwei der Schaltschienen (4, 5, 6, 7) gleichzeitig und der Schaltfinger (12) in eine der längs mittels des Schaltfingers (12) beweglichen Schaltschienen (4, 5, 6, 7) formschlüssig eingreift und dass der Sperrfinger (12) eine den Sperrfinger (12) in Schwenkrichtung des Sperrfingers (12) unterbrechende Freimachung (12a) aufweist, die beim Festsetzen von zwei unmittelbar zu der längs frei beweglichen Schaltschiene (4, 5, 6, 7) benachbarten Schaltschienen (4, 5, 6, 7) über dem Schlitz (4b) der längs frei beweglichen Schaltschiene (4, 5, 6, 7) steht und wobei die mit dem Schaltfinger (2a) bewegliche Schaltschiene (4, 5, 6, 7) den Sperrfinger (12) an der Freimachung (12a) zu dem Sperrfinger (12) berührungslos durchdringt.

4. Sperreinrichtung nach Anspruch 3, **dadurch gekennzeichnet, dass** der Sperrfinger (12) einstückig mit der Konsole (10, 31) ausgebildet ist und daß die Konsole (10, 31) aus Blech gefertigt ist.

5. Sperreinrichtung nach Anspruch 3, **dadurch gekennzeichnet, dass** der mit der Konsole (10, 31) um die Kippachse (9a, 34) schwenkende Sperrfinger (12) innerhalb der in Schwenkrichtung des Sperrfingers (12) hintereinander liegenden und zueinander ausgerichteten Schlitze (4b) solange schwenkbar ist, bis der Schaltfinger (2a) in eine der gewählten längs beweglichen Schaltschienen (4, 5, 6, 7) sowie der Sperrfinger (12) in den Schlitz von zumindest einer festzusetzenden Schaltschiene (4, 5, 6, 7) formschlüssig eingreifen.

6. Sperreinrichtung nach Anspruch 2, **dadurch gekennzeichnet, dass** der Schaltfinger (2a) zwischen einer ersten Wand und einer der ersten Wand gegenüberliegenden zweiten Wand der Konsole (10, 31) mit einem die Schwenkachse (9a, 34) aufweisenden Schwenkbolzen (8) gelagert ist, wobei wenigstens eine der Wände ein Lagerauge (10a) zur Lagerung des Schwenkbolzens (8) aufweist.

7. Sperreinrichtung nach Anspruch 2, **dadurch gekennzeichnet, dass** die Konsole (10, 31) mittels zwei sich gegenüberliegenden Kippbolzen (9) an dem Gehäuse (3) schwenkbar gelagert ist, wobei die Mittenachsen der Kippbolzen (9) und die Kippachse (9a) übereinstimmen und wobei die Kippbolzen (9a) an der Konsole (10, 31) in Lageraugen (10b) eingreifen.

8. Sperreinrichtung nach Anspruch 3, 6 oder 7, **dadurch gekennzeichnet, dass** die Kippachse (9a, 34) und die Schwenkachse (8a, 36) zueinander beabstandet verlaufen.

## Claims

1. Locking device comprising a locking member for selectively locking at least one first gearshift rail (4, 5, 6, 7) that is actuated by a gearshift finger (2a) as well as for locking a second gearshift rail (4, 5, 6, 7), which gearshift finger (2a), pivoted about an axis of tilt (9a, 34), selectively engages into one of the gearshift rails (4, 5, 6, 7) for positive movement, and the gearshift rail (4, 5, 6, 7) into which the gearshift finger (2a) engages can be displaced by the gearshift finger (2a) in at least one longitudinal direction, the first gearshift rail (4, 5, 6, 7) being longitudinally immobilised relative to the second gearshift rail (4, 5, 6, 7) by means of the locking member when the gearshift finger (2a), pivoted about the axis of tilt (9a, 34), engages for positive movement into the second gearshift rail (4, 5, 6, 7), said locking member engaging positively, selectively into a slot (4b) on one of the gearshift rails (4, 5, 6, 7) that is open towards the axis of tilt (9a, 34) and in the directions of pivot of the locking member pivoted about the axis of tilt (9a, 34), the first gearshift rail (4, 5, 6, 7) being longitudinally immobilised relative to the second gearshift rail (4, 5, 6, 7) by means of the locking member when the gearshift finger (2a), pivoted about the axis of tilt (9a, 34), engages for positive movement into the second gearshift rail (4, 5, 6, 7), and the second gearshift rail (4, 5, 6, 7) being longitudinally immobilised relative to the first gearshift rail (4, 5, 6, 7) by means of the locking member when the gearshift finger (2a), pivoted about the axis of tilt (9a, 34), engages for positive movement into the first gearshift rail (4, 5, 6, 7), and the locking member that pivots about the axis of tilt (9a, 34) being able to pivot in the slots (4b) that are situated behind one another in the direction of pivot of the locking member and are aligned to one another, until the gearshift finger (2a) comes to engage positively into one of the selected longitudinally displaceable gearshift rails (4, 5, 6, 7) and the locking member comes to engage positively into the slot (4b) of at least one of the gearshift rails (4, 5, 6, 7) to be immobilised, **characterised in that**, starting from a bracket (10, 31), the locking member engages positively into at least one of the slots (4b), the bracket (10, 31) mounts a gearshift lever (2, 35) in a mounting arrangement (1, 29) for pivoting relative to the bracket (10, 31) about an axis of pivot (8a, 36) and the mounting arrangement (1, 29) mounts the gearshift lever (2, 35) with the bracket (10, 31) for pivoting relative to a housing (3) about an axis of tilt (9a, 34) oriented crosswise to the axis of pivot (8a, 36), and the gearshift lever (2, 35) comprises, on a free end, the gearshift finger (2a) that can pivot about the axis of tilt (9a, 34) and about the axis of pivot (8a, 36).

2. Locking arrangement according to claim 1, **characterised in that** the locking member is a locking finger (12).

3. Locking arrangement according to claim 2, **characterised in that** at least three of the gearshift rails (4, 5, 6, 7) are associated to the gearshift finger (4, 5, 6, 7), the locking finger (12) engages simultaneously into two of the gearshift rails (4, 5, 6, 7), and the gearshift finger (12) engages positively into one of the gearshift rails (4, 5, 6, 7) that can be displaced longitudinally by means of the gearshift finger (12), the locking finger (12) comprises a clearance (12a) that interrupts the locking finger (12) in pivoting direction of the locking finger (12), and, during immobilisation of two gearshift rails (4, 5, 6, 7) that are situated immediately next to the longitudinally freely displaceable gearshift rail (4, 5, 6, 7), said clearance (12a) is situated above the slot (4b) of the longitudinally freely displaceable gearshift rail (4, 5, 6, 7), and the gearshift rail (4, 5, 6, 7) that can be displaced by the gearshift finger (2a) passes through the locking finger (12), through the clearance (12a), without coming into contact with the locking finger (12).

4. Locking arrangement according to claim 3, **characterised in that** the locking finger (12) is configured integrally on the bracket (10, 31), and the bracket (10, 31) is made of sheet metal.

5. Locking arrangement according to claim 3, **characterised in that** the locking finger (12) that pivots together with the bracket (10, 31) about the axis of tilt (9a, 34) can pivot within the slots (4b) that are arranged behind one another in the direction of pivot of the locking finger (12) and are aligned to one another, until the gearshift finger (2a) comes to engage positively into one of the selected longitudinally displaceable gearshift rails (4, 5, 6, 7) and the locking finger (12) comes to engage positively into the slot of at least one of the gearshift rails (4, 5 , 6 7) to be immobilised.

6. Locking arrangement according to claim 2, **characterised in that** the gearshift finger (2a) is mounted between a first wall of the bracket (10, 31) and an opposing second wall by means of a pivoting pin (8) that comprises the axis of pivot (9a, 34), at least one of the walls comprising a mounting eye (10a) for mounting the pivoting pin (8).

7. Locking arrangement according to claim 2, **characterised in that** the bracket (10, 31) is mounted on the housing (3) for pivoting by means of two opposing tilting pins (9), the central axes of the tilting pins (9) and the axis of tilt (9a) are coincident with one another, and the tilting pins (9a) engage into mounting eyes (10b) on the bracket (10, 31).

8. Locking arrangement according to claim 3, 6 or 7, **characterised in that** the axis of tilt (9a, 34) and the axis of pivot (8a, 38) extend in spaced relationship to each other.

## Revendications

1. Dispositif de verrouillage comprenant un organe de verrouillage pour le verrouillage facultatif d'au moins une première réglette (4, 5, 6, 7) de changement de vitesse qui est actionnée par un doigt (2a) de changement de vitesse et d'une seconde réglette (4, 5, 6, 7) de changement de vitesse, ledit doigt (2a) de changement de vitesse, pivoté autour d'un axe de basculement (9a, 34), s'engeant en mouvement positif, à volonté, dans l'une des réglettes (4, 5, 6, 7) de changement de vitesse, la réglette (4, 5, 6, 7) de changement de vitesse dans laquelle s'engage le doigt (2a) de changement de vitesse étant longitudinalement déplaçable par le doigt (2a) de changement de vitesse dans, au moins, une direction, ladite première réglette (4, 5, 6, 7) de changement de vitesse étant immobilisée en direction longitudinale par rapport à la seconde réglette (4, 5, 6, 7) de changement de vitesse à l'aide de l'organe de verrouillage lorsque le doigt (2a) de changement de vitesse, pivoté autour de l'axe de basculement (9a, 34), s'engage en mouvement positif dans la seconde réglette (4, 5, 6, 7) de changement de vitesse, ledit organe de verrouillage s'engageant de manière positive, à volonté, dans une fente (4b) dans l'une des réglettes (4, 5, 6, 7) de changement de vitesse, laquelle fente (4b) est ouverte en direction de l'axe de basculement (9a, 34) et dans les directions de pivotement de l'organe de verrouillage pivoté autour de l'axe de basculement (9a, 34), ladite première réglette (4, 5, 6, 7) de changement de vitesse étant immobilisée en direction longitudinale par rapport à la seconde réglette (4, 5, 6, 7) de changement de vitesse à l'aide de l'organe de verrouillage lorsque le doigt (2a) de changement de vitesse, pivoté autour de l'axe de basculement (9a, 34), s'engage en mouvement positif dans la seconde réglette (4, 5, 6, 7) de changement de vitesse, et ladite seconde réglette (4, 5, 6, 7) de changement de vitesse étant immobilisée en direction longitudinale par rapport à la première réglette (4, 5, 6, 7) de changement de vitesse à l'aide de l'organe de verrouillage lorsque le doigt (2a) de changement de vitesse, pivoté autour de l'axe de basculement (9a, 34), s'engage en mouvement positif dans la première réglette (4, 5, 6, 7) de changement de vitesse, et ledit organe de verrouillage pivotant autour de l'axe de basculement (9a, 34) pouvant pivoter dans les fentes (4b) situées, l'une derrière l'autre, en direction de pivotement de l'organe de verrouillage et alignées, l'une à l'autre, aussi longtemps que le doigt (2a) de changement de vitesse ne vienne s'engager de manière positive dans l'une des réglettes (4, 5, 6, 7) de changement de vitesse sélectionnées, longitudinalement déplaçables et que l'organe de verrouillage ne vienne s'engager de manière positive dans la fente (4b) d'au moins l'une des réglettes (4, 5, 6, 7) de changement de vitesse à immobiliser, **caractérisé en ce que** l'organe de verrouillage s'engage à partir d'une console (10, 31) de manière positive dans, au moins, l'une des fentes (4b), la console (10, 31) loge un levier (2, 35) de changement de vitesse dans un agencement de montage (1, 29) pour pouvoir pivoter par rapport à la console (10, 31) autour d'un axe de pivotement (8a, 36), et l'agencement de montage (1, 29) loge le levier (2, 35) de changement de vitesse avec la console (10, 31) pour pouvoir pivoter par rapport à un boîtier (3) autour d'un axe de basculement (9a, 34) orienté en travers de l'axe de pivotement (8a, 36), et **en ce que** le levier (2, 35) de changement de vitesse comprend, sur une extrémité libre, le doigt (2a) de changement de vitesse qui peut pivoter autour de l'axe de basculement (9a, 34) et autour de l'axe de pivotement (8a, 36).

2. Dispositif de verrouillage selon la revendication 1, **caractérisé en ce que** l'organe de verrouillage est un doigt (12) de verrouillage.

3. Dispositif de verrouillage selon la revendication 2, **caractérisé en ce que**, au moins trois des réglettes (4, 5, 6, 7) de changement de vitesse sont associées au doigt (2a) de changement de vitesse, le doigt (12) de verrouillage s'engage en même temps dans deux des réglettes (4, 5, 6, 7) de changement de vitesse et le doigt (2a) de changement de vitesse s'engage de manière positive dans l'une des réglettes (4, 5, 6, 7) de changement de vitesse qui peuvent être déplacées par le doigt (2a) de changement de vitesse, et que le doigt (12) de verrouillage comprend un déblaiement (12a) qui interrompt le doigt (12) de verrouillage dans la direction de pivotement du doigt (12) de verrouillage, et, pendant l'immobilisation de deux réglettes (4, 5, 6, 7) de changement de vitesse qui sont directement adjacentes à la réglette (4, 5, 6, 7) de changement de vitesse qui est librement déplaçable en direction longitudinale, ledit déblaiement (12a) est situé en dessus de la fente (4b) de cette réglette (4, 5, 6, 7) de changement de vitesse qui est librement déplaçable en direction longitudinale, et **en ce que** la réglette (4, 5, 6, 7) de changement de vitesse qui peut être déplacée par le doigt (2a) de changement de vitesse traverse le doigt (12) de verrouillage par le déblaiement (12a) sans venir en contact avec le doigt (12) de verrouillage.

4. Dispositif de verrouillage selon la revendication 3, **caractérisé en ce que** le doigt (12) de verrouillage est fait d'un seul tenant avec la console (10, 31), et la console (10, 31) est fabriquée en tôle métallique.

5. Dispositif de verrouillage selon la revendication 3, **caractérisé en ce que** le doigt (12) de verrouillage qui pivote avec la console (10, 31) autour de l'axe de basculement (9a, 34) peut pivoter à l'intérieur des fentes (4b) situées, l'une derrière l'autre, en direction de pivotement du doigt (12) de verrouillage et alignées, l'une à l'autre, aussi longtemps que le doigt (2a) de changement de vitesse ne vienne s'engager de manière positive dans l'une des réglettes (4, 5, 6, 7) de changement de vitesse sélectionnées, longitudinalement déplaçables et que le doigt (12) de verrouillage ne vienne s'engager de manière positive dans la fente d'au moins l'une des réglettes (4, 5, 6, 7) de changement de vitesse à immobiliser.

6. Dispositif de verrouillage selon la revendication 2, **caractérisé en ce que** le doigt (2a) de changement de vitesse est monté entre une première paroi de la console (10, 31) et une seconde paroi opposée à la première paroi de la console (10, 31) à l'aide d'un boulon de pivotement (8) qui comprend l'axe de pivotement (8a, 36), au moins l'une de parois comprenant un oeillet de montage (10a) pour le montage du boulon de pivotement (8).

7. Dispositif de verrouillage selon la revendication 2, **caractérisé en ce que** la console (10, 31) est montée en pivotement sur un boîtier (3) à l'aide de deux boulons opposés de basculement (9), que les axes centraux des boulons de basculement (9) et l'axe de basculement (9a) sont coïncidents, l'un avec l'autre, et **en ce que** les boulons de basculement (9) s'engagent sur la console (10, 31) dans des oeillets de montage (10b).

8. Dispositif de verrouillage selon la revendication 3, 6 ou 7, **caractérisé en ce que** l'axe de basculement (9a, 34) et l'axe de pivotement (8a, 36) s'étendent à l'écart, l'un de l'autre.
